# EUROPÄISCHE PATENTANMELDUNG

(11) **EP 1 382 288 A1**
(43) Veröffentlichungstag der Anmeldung: **21.01.2004**
(21) Anmeldenummer: 02015898.6
(22) Anmeldetag: 17.07.2002
(51) Int. Cl.: A47L 15/42

(54) **Energiespar-Spülmachine II**

(30) Priorität: 16.11.2001 DE 20120184 U
(71) Anmelder: Kulbach, Egon, 65549 Limburg (DE)
(72) Erfinder: Kulbach, Egon, 65549 Limburg (DE)
(74) Vertreter: Simon, Peter, Dr.-Jur.

(57) **Zusammenfassung**

Die Erfindung bezieht sich auf eine Energiesparspülmaschine, bestehend aus einem Spülraum (5), in welchem im Seiten- und/oder Rücken- und/oder Deckenteil schlangenförmig verlegte Leitungen (1) durch die Frischwasser fließt angebracht sind. Die so angebrachten schlangenförmigen Leitungen (1) durch die Frischwasser fließt bedingen ein Vorwärmung des Leitungswassers, bevor es in den Wasserboiler (3) fließt. Dadurch bedingt, benötigt der Wasserboiler weniger Energie zum Aufheizen des Wassers auf ca. 85° bis 90°.

## Beschreibung

Die Erfindung bezieht sich auf eine Spülmaschinenvorrichtung, der im Oberbegriff des Anspruches näher bezeichneten Art.

Insbesondere im gewerblichen Bereich werden derzeit Spülmaschinen eingesetzt, die einen aufwendigen Energieverbrauch bedingen, ohne dass eine optimale Ausnutzung der eingesetzten Energie stattfindet.
Dabei wird das Frischwasser in der Regel in einem leistungsstarken Wasserboiler, der außerhalb des eigentlichen Spülraumes angebracht ist, aufgeheizt und sodann in das Innere der Spülmaschine, in den eigentlichen Spülraum durch Spritzdüsen eingeführt und verteilt.

Um einen optimalen Spülgang durchführen zu können, muß das Frischwasser stets eine Austrittstemperatur aus den Spritzdüsen von ca. 85 ° haben.

Da der Wasserdurchfluss pro Spülgang erheblich ist, bedarf es erheblicher Mengen an Energie, um den vorgegebenen Temperaturwert zu erreichen.

Die derzeit eingesetzten Geräte haben außerhalb des Spülraumes einen leistungsstarken Wasserboiler, der aus der Wasserleitung kommendes Wasser auf ca. 85 ° bis 90° erhitzt, und sodann das Frischwasser in den Spülraum über Spritzdüsen abgibt.

Der Erfindung liegt die Aufgabe zugrunde, eine Spülvorrichtung, der im Oberbegriff näher bezeichneten Art zu schaffen, die durch einen niedrigeren Energieaufwand ausgewiesen ist, bei entsprechender Energieersparnis.

Die Aufgabe wird erfindungsgemäß durch die kennzeichnenden Merkmale der Ansprüche 1 bis 4 gelöst.

Die Erfindung beruht auf der Überlegung, im eigentlichen Spülraum unmittelbar vor den Seiten- und/oder Rücken- und/oder Deckenabgrenzungen des Gehäuses schlangenförmig ausgebildete Leitungen anzubringen, durch die das Leitungswasser in den Boiler geführt wurde.

Dabei sind die schlangenförmig anbgebrachten Leitungen aus einem optimal wärmeleitfähigen Material hergestellt.
Die so angebrachten schlangenförmigen Leitungen werden über die Spritzdüsen im Inneren des Spülraumes zwangaläufig mit heißem Wasser angespritzt und dem im Inneren des Spülraumes entstehenden Wasserdampf und der entstehenden Heissluft, ausgesetzt, so dass das Frischwasser, welches durch die schlangenförmigen Leitungen dringt, aufgeheizt wird.
Insbesondere verbleibt nach Abschluss eines Spülvorganges noch erhebliche Wärme in dem eigentlichen Spülraum, einschließlich Wasserdampf, der genutzt wird, um die schlangenförmig angebrachten Leitungen im Inneren des Spülraumes und das darin befindliche Frischwasser aufzuwärmen, so dass die Vorlauftemperatur vor dem Wasserboiler bereits erheblich über der normalen Frischwassertemparatur von ca. 9° liegt. Diese Wärmerückgewinnung bedingt weniger Energieaufwand in dem Wasserboiler, da das Wasser bereits vorgeheizt ist und bedingt insbesondere kleinere Stromanschlußwerte des Boilers, da er infolge des vorgeheizten Wassers leistungsschwächer ausgelegt sein kann, bei gleicher Leistung wie gegenüber herkömmlichen Spülmaschinen ohne Wärmerückgewinnung.

Die Erfindung wird anhand der Zeichnungen näher erläutert. Es zeigt:

### Figur 1 :

Eine Forderansicht mit den schlangenförmig angebrachten Wasserleitungen (1) an der Rückwand innerhalb des Spülraumes.
Ziffer 1 zeigt die schlangenförmig angebrachten Wasserleitungen, die Frischwasser vom Wasseranschluss bis in den Boiler (3) führen.
Der Boiler (3) gibt sodann das aufgeheizte Wasser ab an die Spülarme (2). Die Spülarme verteilen das geheizte Frischwasser im Spülraum (5) durch auf den Spülarmen angebrachte Spritzdüsen (6).
Das Wasser wird dann gesammelt in einem Wasserbad (4), bei entsprechendem Überlauf.

### Figur 2:

zeigt eine Seitenansicht.
Danach sind die schlangenförmig angebrachten Wasserleitungen (1) an den Seitenwänden angebracht innerhalb des Spülraumen (5). Ziffer 7 zeigt den Öffnungsdeckel zum Spülraum hin, wodurch die zu spülenden Teile in den Spülraum verbracht werden.

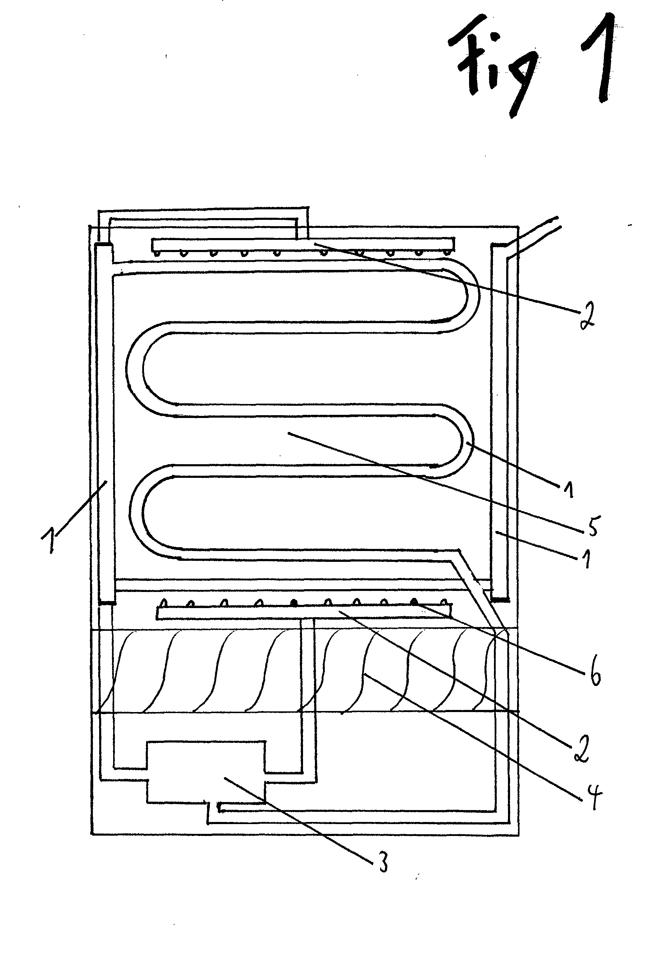

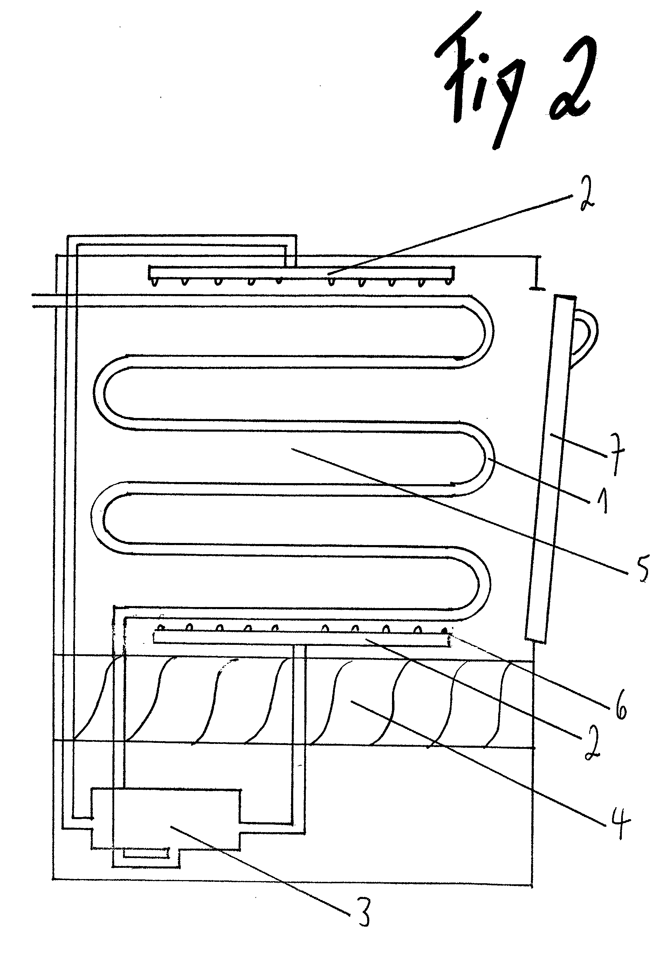

## Patentansprüche

1. Geschlossene Spülvorrichtung mit am Seitenteil, und/oder Deckenteil, und/oder Rückenteil innerhalb des Spülraumes installierten schlangenförmigen Leitungen durch die Leitungswasser in einen sich anschließenden Wasserboiler geführt wird.

2. Anspruch 1 dadurch gekennzeichnt, dass die schlangenförmig angebrachten Leitungen über Spritzdüsen mit heißem Wasser und Wasserdampf aufgeheizt werden.

3. Anspruch 1 **dadurch gekennzeichnet, dass** die schlangenförmigen Leitungen die Wärme im Spülraum nach Abschluss eines Spülvorganges aufnehmen bei Vorwärmung des in den schlangenförmig angebrachten Leitungen befindlichen Frischwassers.

4. Anspruch 1 **dadurch gekennzeichnet, dass** die schlangenförmigen Leitungen selbstreinigend angebracht sind.
